Europäisches Patentamt

European Patent Office

Office européen des brevets

(19)

(11) **EP 1 256 831 A1**

(12) **EUROPEAN PATENT APPLICATION**

(43) Date of publication:
**13.11.2002   Bulletin 2002/46**

(51) Int Cl.⁷: **G02B 7/28**, G01C 3/08

(21) Application number: **01111184.6**

(22) Date of filing: **11.05.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **MVTec Software GmbH**<br>**81675 München (DE)**<br><br>(72) Inventors:<br>• **Eckstein, Wolf, Dr.**<br>**85764 Oberschleissheim (DE)** | • **Steger, Carsten, Dr.**<br>**85386 Eching (DE)**<br>• **Blahusch, Gerhard, Dr.**<br>**82110 Germering (DE)**<br><br>(74) Representative: **VOSSIUS & PARTNER**<br>**Siebertstrasse 4**<br>**81675 München (DE)** |

(54) **Method and system for calibrating an image range device**

(57)     The invention relates to a method and a system for correcting depth errors caused by different types of optical aberrations in depth images generated from depth from focus systems.

Fig 2.

Printed by Jouve, 75001 PARIS (FR)

**Description**

This invention relates to machine vision, and particularly relates to 3-D machine vision techniques, such as depth from focus and depth from defocus techniques for range imaging. In particular, the present invention relates to a method and a system for correcting errors from optical aberrations in depth images from multiple focal images.

In a standard machine vision setup, a video camera acquires an image of an object or a scene. This image is transferred to a computer for analyzing and storing. The computer inspects the image, e. g. by measuring sizes, finding marks etc. From a 2-D image no information about the 3-D shape and the position in space is available. For example, when inspecting semiconductor packages it is often necessary to measure the height of different parts of the package. Alternatively, often the 3-D shape of an object and the orientation of different parts is desired. For these tasks a 3-D range image is necessary. A range image is an image in which every pixel is a range (height), as opposed to a standard 2-D image, where every pixel represents the reflectance or brightness.

For the measurement of 3-D shapes of an object different non-contact methods are available in the prior art. One method is the combination of multiple 2-D video camera images to obtain a range image. In this technique the degree of focus or defocus in two or more images taken at different distances from the object is compared, and from the result of the comparison the range image is computed. The finite depth of field of the imaging system is the reason for the blurring of objects that are out of focus. For images taken at different distances of the object only the parts of the object are focused, which lie at the focus distance to the camera. All other parts of the scenery are blurred. For example, in depth from focus the sharpness is a measure for the amount of blur. For this focused part of the object the measurement of the sharpness results in a high value, while for a blurred part the sharpness results in a low value. The measurement of the sharpness can be done by measuring the amplitude of edges. For focused edges, a high edge amplitude results, while for out of focus edges the edge is smeared out and its amplitude is reduced. Thus, in depth from focus for every pixel the maximum of sharpness in the different images is determined. Together with the information of the capturing distance a range image of the shape of the object is calculated. Therefore, the depth of field of the optical system is used to determine the range. Different types of such systems are described in the prior art. For example, S. K. Nayar et al., Shape from focus, IEEE Trans. on Pattern Analysis and Machine Intelligence, 16 (8), pp. 824-830, Aug. 1994 describe a depth from focus system using multiple images taken with different camera to object distances. In S. K. Nayar et al., Real-Time Focus Range Sensor, IEEE Trans. on Pattern Analysis and Machine Intelligence, 18(12), pp. 1186-1196, Dec. 1996, a depth from defocus system is described using the relative degree of defocus in two images taken at different focal distances to compute a range image.

By comparing the degree of focus or defocus, the problem of finding a point-to-point correspondence between the pixels of the different images arises from the optical projection of the imaging system. This can be overcome by using telecentric lenses as suggested in M. Watanabe et al., Telecentric Optics for Constant-Magnification Imaging, Technical Report CUCS-026-95, Dept. of Computer Science, Columbia University, New York, NY, USA, Sep. 1995. Telecentric optics provide a constant magnification over the depth of field. As an alternative, a warping of the focal images as suggested in US-A-6 148 120 can be used to compensate perspective effects.

The result of the evaluation of the image series is a range image with the height information of the object. This range image can be used to calculate further information about the object, e. g., the measurement of the volume of the object or the calculation of orientation information from the shape of the object. This requires accurate data in the range image. However, up to now the influence of optical aberrations has been neglected in the calculation of the range image.

Different types of aberrations exist. The main errors caused by aberrations are the following ones. Because of spherical aberration, light rays have different focus points depending on their distance to the optical axis. The coma is formed by an asymmetric accumulation of light intensity for off-axis points. The astigmatism is the separation of the tangential and sagittal focal surface. The curvature of field is the curvature of the tangential and sagittal fields. The distortion is the reason that straight lines that are off-axis are imaged as curved lines. A detailed description of the different types of aberration can be found in M. Born et al. Principles of Optics, Sixth Edition, Cambridge University Press, 1998.

Of the different types of aberrations, the spherical aberration, coma, and astigmatism are normally responsible for the lack of sharpness of the image. The curvature of field is related to the position and the distortion for the form of the objects. In general, it is not possible to design an optical system that is free of all the above mentioned errors.

It is the object of the present invention to provide an improved method and an improved system for obtaining images taking into account errors caused by aberrations. This object is achieved with the features of the claims.

Given a range image generated from a plurality of images at different focal distances with a depth from focus or defocus method, the present invention provides a method and a system for obtaining images that eliminate the range errors that are caused by optical aberrations. This is achieved according to the invention by generating an error image, which includes all range errors of the optical system, from an image series of a known calibration target. The correction of the range image is done after the evaluation of the image series by subtracting the error image from the computed range image.

As an alternative to using the error image directly to correct the errors, a more robust error image can be obtained by robustly fitting a curved surface to the raw error image. The parameters of the fitted surface can be used to correct the range image.

In the accompanying drawings:

FIG. 1    is a ray diagram of an optical system showing the geometric reason for range errors;
FIG. 2    is block diagram which describes a method and system for the measurement of the error image; and
FIG. 3    is a flow chart showing the processing operations used to correct the range errors.

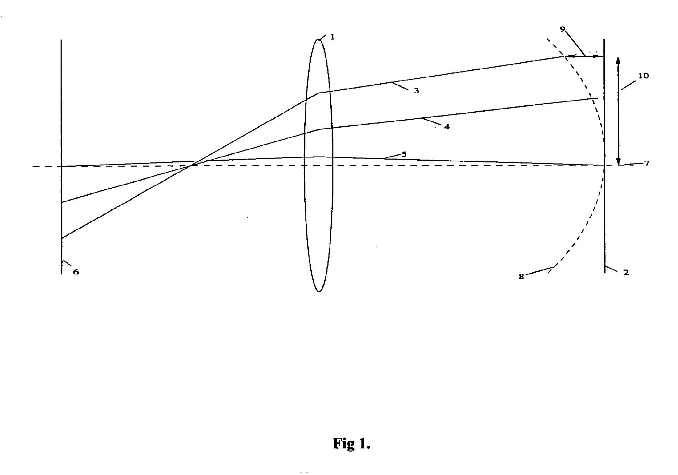

FIG. 1 shows the geometric reason for range errors. In FIG. 1, lens 1 focuses an image of an object 6 onto an imaging detector 2. Ray 5 lies along the central axis 7. Rays 3 and 4 impinge upon a point away from the central axis 7. Because of the optical aberration they are focused on the curvature of field on the surface 8. The points from the rays 3 and 4 are focused at other camera - object distances than the point from the central axis 5. This results in an error 9 in the range image, which is a function of the distance 10 to the central axis.

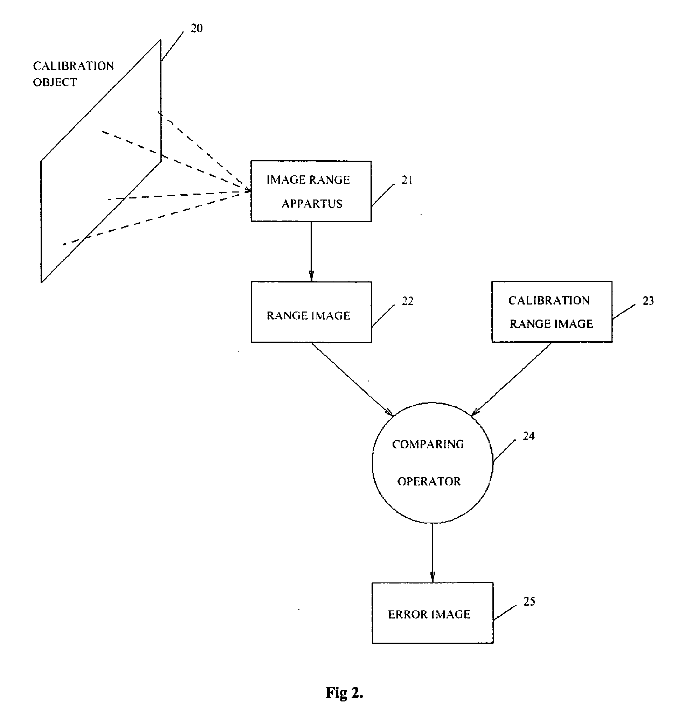

According to the invention, errors caused by optical aberrations are corrected on the basis of an error image. Fig. 2 illustrates how an error image is obtained according to the present invention. First, the shape of a calibration object 20 is obtained with an image range device 21. There are no special requirements for the calibration object. Only the shape of the calibration object must be known. In a preferred embodiment, a simple planar object like a plate is used as calibration object. The image range device 21 generates a range image 22 from the calibration object 20. The image range device 21 takes two or more 2D images of the object at different object distances. From the degree of focus or defocus the range image 22 is calculated. This is preferably done by measuring for every pixel of all images the edge amplitude. The value $p_{rc}(x,y)$ of the range image 22 at the pixel position $(x,y)$ is calculated from:

$$p_{rc}(x,y) = \text{distance}(\arg\max_{i=1..N}(A_i(x,y))) \tag{1}$$

In equation 1, $A_i(x,y)$ is the edge amplitude of the $i$-th image of the image series at the pixel position $x$ and $y$. The function distance($\arg\max_{i=1..N}()$) takes the distance of the image, which has the greatest edge amplitude $A_i(x,y)$.

The (known) shape of the calibration object is represented in a calibration range image 23. This representation can be generated from every calibration object. For a planar object it is simply a plane. For other objects one has to calculate a calibration range image. To do this, for every pixel of the calibration range image the distance of the calibration object from an undistorted focal plane must be computed. If the surface of the calibration object, which is projected by the optical system, is $S(x,y)$ at the position $x$ and $y$, then the distance $D(x,y)$ is:

$$D(x,y) = F - S(x,y) \tag{2}$$

In equation 2, the parameter F describes the projection by the optical system, which includes all camera parameters of the system, like the focal length and the distance between the lens system and the imaging detector. Since in this procedure the line of sight from every pixel to the object must be computed, the camera parameters must be the same as those of the optical system that is used to acquire the range image. This procedure can be omitted if a planar object is used, which is oriented perpendicular to the optical axis of the optical system. Then the calibration range image is an image with a constant height.

For an ideal system, i.e., a system with no optical aberrations, the two range images of the calibration object, i.e., the range image 22 from the image range device 21 and the calibration range image 23, should be the same. However, because of the effect of the optical aberrations there is in fact a difference between the two range images. With a comparing operator 24 the difference between the two range images is used to calculate an error image 25. The error image $I(x,y)$ at the pixel position $x$ and $y$ is calculated from the range image $p_{rc}(x,y)$ and the calibration image $p_{calib}(x,y)$ as follows:

$$I(x,y) = p_{rc}(x,y) - p_{calib}(x,y) \tag{3}$$

The error image 25 contains all differences between the range image 22 and the calibration range image 23. A small part of the differences may be caused by noise or other perturbations.

According to a preferred embodiment, in order to achieve a more robust error image, a curved surface is fitted to the raw data of the error image 25. Of the optical aberrations, the curvature of field is the cause for range errors. The curvature of field can be approximated by equation 4:

$$\Delta\varepsilon = A^*r^2 \tag{4}$$

The error $\Delta\varepsilon$ shown in FIG. 1 as the distance 9, is a function of the distance $r$ to the optical axis, shown in FIG. 1 as the distance 10, and the parameter A. The parameter A is a constant describing the geometrical and material-specific properties of the optical system.

Therefore, according to a preferred embodiment, a curved surface of second order is used for the fitting function:

$$\Delta\varepsilon(x,y) = a^*x^2 + b^*y^2 + c^*x^*y + d^*x + e^*y + f \tag{5}$$

Equation 5 describes the universal form of a second order surface. Herein, $x$ and $y$ are the pixel position in the error image and a to $f$ are the fitting parameters. The parameters $a$, $b$, and $c$ are responsible for the curvature, the parameters $d$ and $e$ are the linear part in the $x$-and $y$- direction and $f$ is a constant offset. The fitting of the surface is preferably done with a least squares method by minimizing the distance between the surface and the error image. This means that the following function needs to be minimized:

$$\varepsilon = \sum_{x,y}\left(\Delta\varepsilon(x,y) - I(x,y)\right)^2 \tag{6}$$

$\varepsilon$ is the sum over all pixels $(x,y)$ of the distances between the curved surface $\Delta\varepsilon$ and the error image $I$. The function $\varepsilon$ is minimized if $D\varepsilon = 0$, where D are the partial derivatives of $\varepsilon$ with respect to the parameters a to $f$ (see R. M. Haralick et al., Computer and Robot Vision, Addison-Wesley Volume I, 1992). This leads to an over-determined set of linear equations: Ax = b, which can be solved by standard numerical methods, e.g., the singular value decomposition (SVD) (see W. H. Press et al., Numerical Recipes in C: The Art of Scientific Computing, 2nd Edition, Cambridge University Press, 1992).

The standard least squares fitting yields good results as long as there are no gross outliers in the range image. Since the calculated range image will usually contain outliers, robust least squares fitting procedures are necessary to suppress outliers in the fitting procedure. To do this, the least squares function is preferably replaced by a new function for the distance between the curved surface and the error image. This new function increases more slowly than the quadratic function of the standard least squares minimization. Minimizing the new function is again done by setting the partial derivatives to zero. The result can be written again as a least squares problem with a weighting function:

$$\varepsilon = \sum_{x,y} w(x) * \left(\Delta\varepsilon(x,y) - I(x,y)\right)^2 \tag{7}$$

The weighting function $w(x)$ is a function of the distance between the curved surface and the error image. For different types of weighting functions see P. J. Huber, Robust Statistical Procedures, SIAM, 1996 or F. Mosteller et al., Data Analysis and Regression, Addison Wesley, 1977. The calculation of the parameters of the curved surface is now done in an iterative process. In every step the weighting function is evaluated from the results of the preceding step. Then the equation system is solved, and a new set of parameters is calculated. This is done until the resulting error is smaller than a upper limit or a fixed number of iterations is reached.

From equation 5 and the parameters obtained from the robust fitting, a more robust error image is obtained by evaluation of the curved surface at every pixel position of the error image.

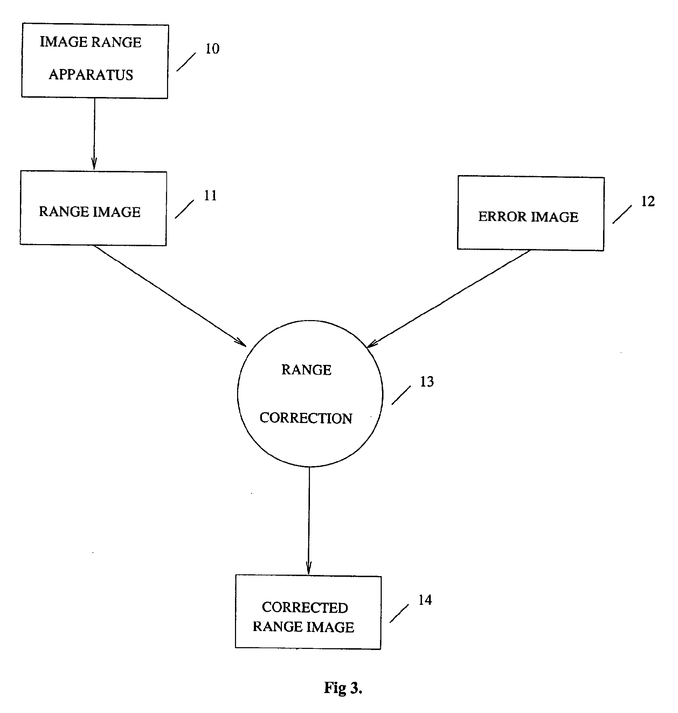

FIG. 3 is a flowchart that illustrates a preferred method to correct the range errors in images. In this method, the correction is computed on a point-by-point basis using a range image 11 and an error image 12. The error image 12 shown in Fig. 3 corresponds to the error image 25 shown in Fig. 2. The range image 11 $p_r(x,y)$ is obtained from the image range device 10. The image range device 21 used for obtaining the error image on the basis of a calibration object is preferable identical to the image range device 10 used for obtaining the actual range image of the actual object. The error image 12 *H(x,y)* is preferably generated by the method illustrated in FIG. 2. In the range correction means 13, the range of every pixel in the range image 11 $p_r(x,y)$ is corrected with the range of the same pixel in the error image *H (x,y)*, where *H (x,y)* is either the error image *I(x,y)* or the calculated error image by the optical aberration $\Delta\varepsilon$, i.e., the corrected range image $p_c(x,y)$ is obtained as follows:

$$p_c(x,y) = p_r(x,y) - H(x,y) \qquad (8)$$

This procedure is done for every pixel (*x,y*) in the range image. The result is a corrected range image 14 $p_c$ (*x,y*), which accurately represents the shape of the object.

**Claims**

1. A method for calibrating an image range device using depth from focus or depth from defocus, the method comprising the steps of:

    a) acquiring a plurality of images of a calibration object at different object-camera distances;
    b) computing a range image $p_{rc}(x,y)$ from the plurality of images of said calibration object;
    c) comparing the range image $p_{rc}(x,y)$ to the geometry of the calibration object for calculating an error image *I(x,y)*.

2. A method for obtaining an accurate range image from an image range device using depth from focus or depth from defocus, the method comprising the steps of:

    a) acquiring a plurality of images of a calibration object at different object-camera distances;
    b) computing a range image $p_{rc}(x,y)$ from the plurality of images of said calibration object;
    c) comparing the range image $p_{rc}(x,y)$ to the geometry of the calibration object for calculating an error image *I(x,y)*;
    d) acquiring a plurality of images of an object at different object-camera distances;
    e) computing a range image $p_r(x,y)$ from the plurality of images of said; and
    f) correcting the range image $p_r(x,y)$ with the calculated error image to provide an accurate range image $p_c(x,y)$.

3. The method of claim 1 or 2, wherein in step b) the range image $p_{rc}(x,y)$ is computed from the plurality of images of said calibration object by depth from focus or depth from defocus methods.

4. The method of claim 2 or 3, wherein in step e) the range image $p_r(x,y)$ is computed from the plurality of images of said object by depth from focus or depth from defocus methods.

5. The method of any of claims 1 to 4, wherein step b) and/or step e) comprises the step of measuring for every pixel of all acquired images the edge amplitude $A_i(x,y)$.

6. The method of any of claims 1 to 5, wherein step b) and/or step e) comprises the step of calculating the range image such that it corresponds to the distance of the image having the greatest edge amplitude.

7. The method of any of claims 1 to 6, wherein step c) comprises the step of calculating a difference between the range image $p_{rc}(x,y)$ of the calibration object and the calibration image $p_{calib}(x,y)$ of the calibration object.

8. The method of any of claims 1 to 7, wherein step f) comprises the step of calculating a difference between the range image $p_r(x,y)$ of said object and the error image.

9. The method of any of claims 1 to 8, wherein calculating the error image further comprises the step of fitting a surface to the raw error image.

10. The method of claim 9, wherein the fitting is done with a second order surface.

11. The method of claim 10, wherein the fitting is done by minimizing the least squares distance.

**12.** The method of claim 10, wherein the fitting is done by robustly minimizing the least squares distance.

**13.** Calibration system comprising

range image computing means (11, 22);
a comparator (24) for calculating an error image on the basis of the range image obtained by said range image computing means (11, 22) from a calibration object and
a known calibration range image.

**14.** Calibration system according to claim 13, further comprising range correction means (13) for correcting the range image of a desired object obtained with said range image computing means (11, 22) using said calculated error image.

**15.** A computer program comprising program code means for performing all the steps of any one of the claims 1 to 12 when said program is run on a computer.

**Fig 1.**

CALIBRATION
OBJECT

20

IMAGE RANGE
APPARTUS

21

RANGE IMAGE

22

CALIBRATION
RANGE IMAGE

23

COMPARING
OPERATOR

24

ERROR IMAGE

25

**Fig 2.**

IMAGE RANGE
APPARATUS
/ 10

RANGE IMAGE / 11

ERROR IMAGE / 12

RANGE
CORRECTION
/ 13

CORRECTED
RANGE IMAGE
/ 14

**Fig 3.**

**European Patent Office**

**EUROPEAN SEARCH REPORT**

Application Number

EP 01 11 1184

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | US 6 148 120 A (SUSSMAN MICHAEL) 14 November 2000 (2000-11-14) * claim 1; figure 1 * | 1-15 | G02B7/28 G01C3/08 |
| A | US 6 226 077 B1 (DUNNE JEREMY G) 1 May 2001 (2001-05-01) * claims 1,2; figures 1,3 * | 1-15 | |
| A | US 5 703 677 A (SIMONCELLI EERO ET AL) 30 December 1997 (1997-12-30) * claims 1,2; figure 1 * | 1,2,13 | |
| A | US 5 694 203 A (OGAWA YASUJI) 2 December 1997 (1997-12-02) * abstract; figure 1 * | 1 | |

**TECHNICAL FIELDS SEARCHED (Int.Cl.7)**

G02B
G01C

The present search report has been drawn up for all claims

| Place of search | Date of completion of the search | Examiner |
|---|---|---|
| THE HAGUE | 10 December 2001 | Romeo, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**            EP 01 11 1184

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2001

| Patent document cited in search report | | Publication date | Patent family member(s) | | Publication date |
|---|---|---|---|---|---|
| US 6148120 | A | 14-11-2000 | NONE | | |
| US 6226077 | B1 | 01-05-2001 | US | 6057910 A | 02-05-2000 |
| | | | US | 5880821 A | 09-03-1999 |
| | | | US | 5703678 A | 30-12-1997 |
| | | | US | 5574552 A | 12-11-1996 |
| | | | US | 2001012104 A1 | 09-08-2001 |
| | | | US | 5926260 A | 20-07-1999 |
| | | | AU | 690003 B2 | 09-04-1998 |
| | | | AU | 4503896 A | 07-08-1996 |
| | | | CA | 2203278 A1 | 25-07-1996 |
| | | | EP | 0804714 A1 | 05-11-1997 |
| | | | JP | 10512954 T | 08-12-1998 |
| | | | WO | 9622509 A1 | 25-07-1996 |
| US 5703677 | A | 30-12-1997 | AU | 1118997 A | 05-06-1997 |
| | | | WO | 9718494 A1 | 22-05-1997 |
| US 5694203 | A | 02-12-1997 | NONE | | |

EPO FORM P0459

For more details about this annex : see Official Journal of the European Patent Office, No. 12/82